(19) Europäisches Patentamt
European Patent Office
Office européen des brevets

(11) **EP 2 239 611 A1**

(12) **EUROPEAN PATENT APPLICATION**
published in accordance with Art. 153(4) EPC

(43) Date of publication:
**13.10.2010 Bulletin 2010/41**

(51) Int Cl.:
**G02B 13/00** (2006.01)     **G02B 3/14** (2006.01)
**G02B 7/09** (2006.01)     **G02B 7/28** (2006.01)
**G02B 13/18** (2006.01)

(21) Application number: **09707403.3**

(22) Date of filing: **19.01.2009**

(86) International application number:
**PCT/JP2009/050690**

(87) International publication number:
**WO 2009/098930 (13.08.2009 Gazette 2009/33)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **04.02.2008 JP 2008024216**

(71) Applicant: **Sony Corporation
Tokyo 108-0075 (JP)**

(72) Inventor: **OKAMOTO, Yoshiki
Tokyo 108-0075 (JP)**

(74) Representative: **Thévenet, Jean-Bruno et al
Cabinet Beau de Loménie
158, rue de l'Université
75340 Paris Cédex 07 (FR)**

(54) **IMAGE PICKING-UP LENS SYSTEM AND IMAGE PICKING-UP DEVICE USING THE SAME**

(57)     An imaging lens system having an autofocus function using a liquid lens and an imaging apparatus using the imaging lens system is provided, in which the imaging lens system is configured with a smaller number of lenses to facilitate downsizing.

The imaging lens system includes a first lens group 1 and a second lens group 2 in this order from the object side. The first lens group 1 includes a liquid lens system in which the curvature radius of the interface between an insulating liquid 12 and a conductive liquid 13 changes depending on an applied voltage. When the object distance is infinite, the curvature center of the interface between the insulating liquid 12 and the conductive liquid 13 of the liquid lens system is shifted toward the conductive liquid 13.

[FIG.1]

EP 2 239 611 A1

**Description**

Technical Field

The present invention relates to an imaging lens system having an autofocus function and an imaging apparatus using the imaging lens system.

Background Art

As an electrowetting device using electrowetting, variable-focus lens devices using a liquid lens have been introduced by Varioptic (France) and Philips (Netherlands) (for example, see Non-patent Document 1).
Also, imaging lens systems having an autofocus function by similarly using a liquid lens have been proposed (for example, see Patent Documents 1 and 2).
The imaging lens system proposed in Patent Document 1 includes four lens groups, in which a first lens group on the object side includes a liquid lens.
On the other hand, the imaging lens system proposed in Patent Document 2 includes three lens groups, in which a first lens group also includes a liquid lens.
Non-patent Document 1: S. Kuiper et al., "Variable-focus liquid lens for miniature cameras", Applied Physics Letters, Vol. 85, No. 7, 16 August 2004, pp. 1128-1130
Patent Document 1: JP-A-2005-84387
Patent Document 2: JP-A-2006-72295

Disclosure of the Invention

Problems to be Solved by the Invention

However, the imaging lens systems proposed in Patent Documents 1 and 2 include three or more lens groups, thereby including a large total number of lenses, which is a disadvantage in downsizing an imaging lens system and an imaging apparatus having the imaging lens system. Especially for providing an imaging apparatus to compact equipment such as a mobile phone, further reducing the number of lenses is necessary in order to develop an imaging lens system having a liquid lens for practical use.
In view of the above problem, it is an object of the present invention to provide an imaging lens system having an autofocus function using a liquid lens and an imaging apparatus using the imaging lens system, in which the imaging lens system is configured with a smaller number of lenses to facilitate downsizing.

Means for Solving the Problems

In order to solve the above problem, an imaging lens system in accordance with the invention includes a first lens group and a second lens group in this order from the object side. The first lens group includes a liquid lens system in which the curvature radius of the interface between an insulating liquid and a conductive liquid changes depending on an applied voltage. When the object distance is infinite, the curvature center of the interface between the insulating liquid and the conductive liquid of the liquid lens system is shifted toward the conductive liquid.
In the imaging lens system in accordance with the invention, the liquid lens system preferably includes a light-transmissive substrate, the insulating liquid, the conductive liquid and a light-transmissive substrate disposed in this order from the object side.
An imaging apparatus in accordance with the invention includes the above-described imaging lens system. Accordingly, the imaging apparatus includes an imaging lens system, a stop and an imaging unit. The imaging lens system includes a first lens group and a second lens group in this order from the object side. The first lens group includes a liquid lens system in which the curvature radius of the interface between an insulating liquid and a conductive liquid changes depending on an applied voltage. When the object distance is infinite, the curvature center of the interface between the insulating liquid and the conductive liquid of the liquid lens system is shifted toward the conductive liquid.
As described above, an imaging lens system and an imaging apparatus using the imaging lens system in accordance with the invention includes a first lens group and a second lens group in this order from the object side. The first lens group includes a liquid lens system in which the curvature radius of the interface between an insulating liquid and a conductive liquid changes depending on an applied voltage. This configuration using the two lens groups can reduce the total number of lenses with respect to an imaging lens system using a conventional liquid lens, facilitating downsizing.

Also, when the object distance is infinite, the curvature center of the interface between the insulating liquid and the conductive liquid of the liquid lens system is shifted toward the conductive liquid, which can reduce the undercorrection of the chromatic aberration.

Further, in the imaging lens system in accordance with the invention, configuring the liquid lens system such that a light-transmissive substrate, the insulating liquid, the conductive liquid and a light-transmissive substrate are disposed in this order from the object side allows the spherical aberration, the astigmatism and the distortion aberration to be reduced to a practically acceptable level, as described later. Thus, the imaging lens system and the imaging apparatus having good properties can be provided.

Advantage of the Invention

According to the invention, an imaging lens system having an autofocus function using a liquid lens can be configured with a smaller number of lenses to facilitate downsizing.

Brief Description of the Drawings

[Fig. 1] A schematic configuration diagram of an imaging apparatus including an imaging lens system in accordance with an embodiment of the invention.

[Fig. 2] A schematic configuration diagram of an imaging lens system in accordance with a first embodiment of the invention.

[Fig. 3] Figs. 3A-3C showing the spherical aberration, the astigmatism and the distortion aberration for a first through third states of the imaging lens system in accordance with the first embodiment of the invention.

[Fig. 4] A schematic configuration diagram of an imaging lens system in accordance with a second embodiment of the invention.

[Fig. 5] Figs. 5A-5C showing the spherical aberration, the astigmatism and the distortion aberration for a first through third states of the imaging lens system in accordance with the second embodiment of the invention.

[Fig. 6] A schematic configuration diagram of an imaging lens system in accordance with a third embodiment of the invention.

[Fig. 7] Figs. 7A-7C showing the spherical aberration, the astigmatism and the distortion aberration for a first through third states of the imaging lens system in accordance with the third embodiment of the invention.

[Fig. 8] A schematic configuration diagram of an imaging lens system in accordance with a fourth embodiment of the invention.

[Fig. 9] Figs. 9A-9C showing the spherical aberration, the astigmatism and the distortion aberration for a first through third states of the imaging lens system in accordance with the fourth embodiment of the invention.

Best Mode for Carrying Out the Invention

An example of the best mode for carrying out the invention is described below, and it should be understood that the invention is not limited to the example.

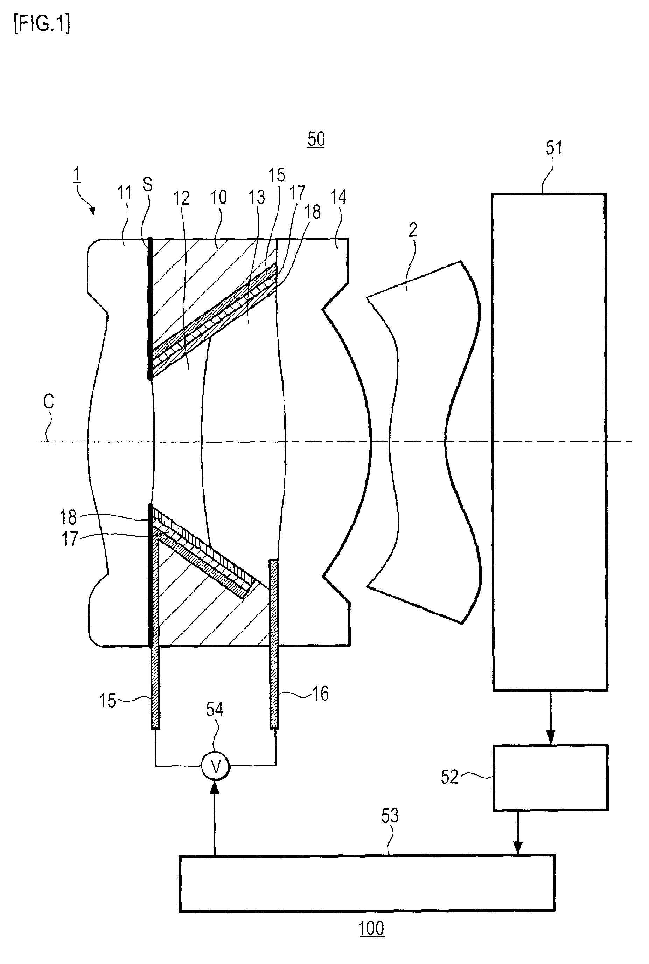

Fig. 1 shows a schematic configuration of an imaging lens system and an imaging apparatus using the imaging lens system in accordance with an embodiment of the invention. An imaging lens system 50 of an imaging apparatus 100 includes a first lens group 1 and a second lens group 2. For the first lens group 1, a variable-focus lens using a liquid lens system is used. The second lens group 2 may be configured with a single lens, for example, when both surfaces of the lens are aspheric.

The liquid lens system used for the first lens group 1 of the imaging lens system 50 includes a light-transmissive substrate 11 disposed at an aperture on the object side of an enclosure 10 and a light-transmissive substrate 14 disposed at an aperture on the side opposite to the object side. The space enclosed by the enclosure 10 and the light-transmissive substrates 11, 14 is maintained liquid-tight. The shape of the enclosure 10 may be a shape rotationally symmetrical about an optical axis C, such as a cylinder or a cone with the top cut off. In the case shown in Fig. 1, the shape of the enclosure 10 is a cone with the top cut off perpendicularly to the optical axis C. The enclosure 10 contains an insulating liquid 12 and a conductive liquid 13 in this order from the object side. The enclosure 10 may be made of an insulating material. The light-transmissive substrates 11 and 14 may be made of a glass or a transparent resin such as plastic. Using a non-light-transmissive material for the enclosure 10 allows the aperture on the object side to operate as a stop S. On the other hand, the materials of the insulating liquid 12 and the conductive liquid 13 are light-transmissive, have different refraction indexes, and have the same density (specific gravity). The insulating liquid 12 may be made of one or more of various oils such as silicone oil. The conductive liquid 13 may be made of an aqueous solution, such as salt water, that is not soluble in oil.

In the liquid lens system included in the first lens group 1 shown in Fig. 1, a first electrode 15 is formed conically from the inner wall of the enclosure 10 to the aperture on the object side. A portion of the first electrode 15 is pulled out to be a terminal. Also, a second electrode 16 is formed at the aperture on the image side of the enclosure 10, in contact with the internal conductive liquid 13. A portion of the second electrode 16 is pulled out to be a terminal. An edge of the first electrode 15 extended on the inner wall of the enclosure 10 is disposed separated from the aperture on the image side and is formed separated from the second electrode 16. Also, a dielectric film 17 and a water-repellent film 18 are provided on the surface of the first electrode 15 in the enclosure 10.

Also, the imaging apparatus 100 includes an imaging unit 51 disposed on the image side of the imaging lens system 50. The imaging unit 51 may be a charge-coupled device (CCD) or a complementary metal oxide semiconductor (CMOS) device or the like including: a plurality of photoelectric conversion sections for converting illuminated light energy to charge; a charge storage section for storing the charge; and a charge transfer section for transferring and sending out the charge. Further, the imaging apparatus 100 includes: a signal conversion unit 52 for converting a light signal detected by the imaging unit 51; a control unit 53 for processing a signal; and a voltage application unit 54 for applying a voltage between the first and second electrodes 15 and 16 of the first lens group 1 including the liquid lens system.

With this configuration, in the first lens group 1, when the voltage application unit 54 applies an appropriate voltage between the electrodes 15 and 16, the curvature of the interface between the insulating liquid 12 and the conductive liquid 13 will change. This change in the curvature can cause the lens effect on incident light to change, thereby changing the focal length.

Specifically, when no voltage is applied between the first and second electrodes 15 and 16, the interface between the insulating liquid 12 and the conductive liquid 13, filling the enclosure 10, forms a portion of a sphere with a certain radius due to the balance between the surface tensions of the liquids 12 and 13 and the inner wall surface of the enclosure 10.

When the voltage application unit 54 applies a voltage between the first and second electrodes 15 and 16, the conductive liquid 13 behaves as if its "wettability" to the inner wall surface of the enclosure 10 is improved (this phenomenon is called electrowetting), decreasing the contact angle. As a result, the curvature radius of the interface between the insulating liquid 12 and the conductive liquid 13 increases, causing the spherical surface to get closer to a flat surface. Thus, the difference of refraction index and the curvature of the interface between the insulating liquid 12 and the conductive liquid 13 provides a lens effect, and the voltage application causes the curvature of the liquid interface to change due to electrowetting as above, thereby changing the focal length.

Advantageously, since the variable-focus lens using electrowetting as above essentially allows no current to flow except when discharging, it consumes very low power. Also advantageously, since this variable-focus lens has no mechanical moving part, it has a longer life than that of a conventional variable-focus lens in which a lens is moved by a motor or the like. Further, advantageously, since this variable-focus lens has no motor, it can provide an autofocus mechanism with a small footprint and simple configuration.

By the way, two liquids - insulating liquid (oil) and conductive liquid (water) - forming a liquid lens generally have the following relationship:

$$n1 > n2, \text{ and}$$
$$\nu1 < \nu2,$$

where n1 and $\nu1$ are the refraction index and Abbe's number of the insulating liquid, respectively, and n2 and $\nu2$ are the refraction index and Abbe's number of the conductive liquid, respectively. Therefore, when the interface between the two liquids is convex toward the insulating liquid with the refraction index of n1, it has a positive power and a positive chromatic aberration. When the interface is concave toward the insulating liquid, it has a negative power and a negative chromatic aberration.

Generally, since the chromatic aberration of the entire optical system of an imaging apparatus tends to be undercorrected, it may be desirable that the interface between the two liquids is concave toward the insulating liquid. Accordingly, when the first lens group 1 including the liquid lens system includes the light-transmissive substrate 11, the insulating liquid 12, the conductive liquid 13 and the light-transmissive substrate 14 disposed in this order from the object side, the curvature of the two-liquid interface is preferably concave toward the insulating liquid 12.

Thus, the imaging lens system 50 of this embodiment is configured such that, when the object distance is infinite, the curvature center of the interface between the insulating liquid 12 and the conductive liquid 13 of the first lens group 1 is shifted toward the conductive liquid 13. This configuration, at least when the object distance is infinite, causes the curvature of the interface between the two liquids to be concave toward the insulating liquid, which can reduce the undercorrection of the chromatic aberration of the entire imaging lens system 50.

Also, in this configuration, it is desirable that the liquid lens system of the first lens group 1 includes the insulating liquid 12 disposed on the object side and the conductive liquid 13 disposed on the image side, as shown in Fig. 1. This disposition allows the interface between the liquids 12 and 13 to be shifted toward the conductive liquid 13 when no voltage is applied.

Next, specific numerical examples of the imaging lens system in accordance with the embodiment of the invention are described below as a first through fourth embodiments. The following embodiments assume that the first lens group 1 has a positive power (refracting power) and the second lens group 2 has a negative power (refracting power).

[1] First embodiment

First, a numerical example of a specific lens structure applicable as the first embodiment is described. This example is applied to the imaging lens system 50 of the imaging apparatus 100 described with reference to Fig. 1. The focal length f, the F-number Fno and the angle of view $2\omega$ ($\omega$ is a half angle of view) of the imaging lens system 50 are as follows:

f = 3.7 mm,
Fno = 2.7, and
$2\omega$ = 63°.

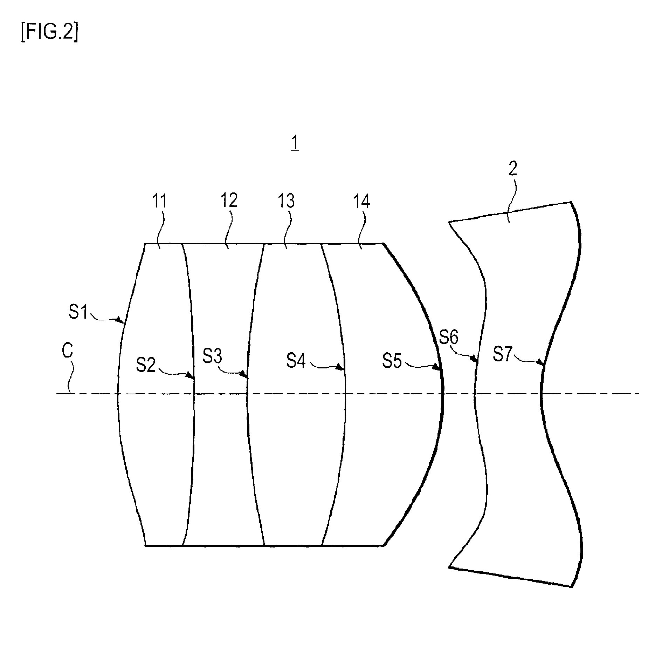

As shown in Fig. 2, the incidence and outgoing surfaces of the light-transmissive substrate 11, the insulating liquid 12, the conductive liquid 13 and the light-transmissive substrate 14 of the first lens group 1 and also the second lens group 2 are denoted in the order from the object side as first through seventh surfaces S1 through S7. In Fig. 2, the parts described with reference to Fig. 1 are denoted by the same numerals, and will not be repeatedly described. Then, for each of the first through seventh surfaces S1 through S7, Table 1 below shows the curvature radius, the spacing along the optical axis between the surfaces (the distance to the next surface) (for the seventh surface S7, the distance to the surface of the imaging unit 51), the refraction index of d-ray of wavelength 587.56 nm for the medium between the surfaces and, similarly, the Abbe's number of d-ray, and others. Note that the second surface S2 also operates as the stop S using the edge of the enclosure 10 as described with reference to Fig. 1.

[Table 1]

| Surface number | Curvature radius r [mm] | Spacing along optical axis between surfaces d [mm] | Refraction index between surfaces n [d-ray] | Abbe's number $\nu$ [d-ray] | Type etc. |
|---|---|---|---|---|---|
| S1 | 2.945 | 0.700 | 1.5251 | 56.0 | Aspheric |
| S2 | -33.896 | 0.500 | 1.4982 | 34.6 | Aperture stop, aspheric |
| S3 | R3 | 0.900 | 1.3430 | 47.0 | |
| S4 | -4.225 | 0.900 | 1.5251 | 56.0 | Aspheric |
| S5 | -1.923 | 0.300 | - | - | Aspheric |
| S6 | 1.839 | 0.600 | 1.5251 | 56.0 | Aspheric |
| S7 | 1.050 | 0.500 | - | - | Aspheric |

Table 2 below shows aspherical coefficients of the first, second and fourth through seventh surfaces S1, S2 and S4 through S7 when Eq. 1 below is used as aspherical surface equation. In Eq. 1, Z is the distance along the optical axis from the lens surface when the light traveling direction is a positive direction, h is the height perpendicular to the optical axis, R is the curvature radius, k is a conic constant, and A and B are 4th and 6th order aspherical coefficients, respectively.

[Eq. 1]

$$Z = \frac{\dfrac{h^2}{R}}{1+\sqrt{1-(1+k)\dfrac{h^2}{R^2}}} + Ah^4 + Bh^6$$

[Table 2]

| Surface number | k | A | B |
|---|---|---|---|
| S1 | 0.533977 | $-0.890655 \times 10^{-2}$ | $-0.101774 \times 10^{-1}$ |
| S2 | -2115.453689 | $-0.240576 \times 10^{-1}$ | - |
| S4 | -0.783036 | $-0.145462 \times 10^{-2}$ | - |
| S5 | -8.683872 | -0.132614 | $0.335444 \times 10^{-1}$ |
| S6 | 0.268617 | -0.213273 | - |
| S7 | -3.185848 | $-0.571872 \times 10^{-1}$ | $0.580858 \times 10^{-3}$ |

Table 3 below shows numerical examples of R3 of Table 1 above for object distances of 600, 120 and 50 mm in the first and second lens groups 1 and 2 shown in Fig. 2. Note that the numerical value with an object distance of 600 mm would be almost the same as the value with an infinite object distance.
[Table 3]

| Object distance [mm] | R3 |
|---|---|
| 600 | 4.504 |
| 120 | 5.931 |
| 50 | 11.630 |

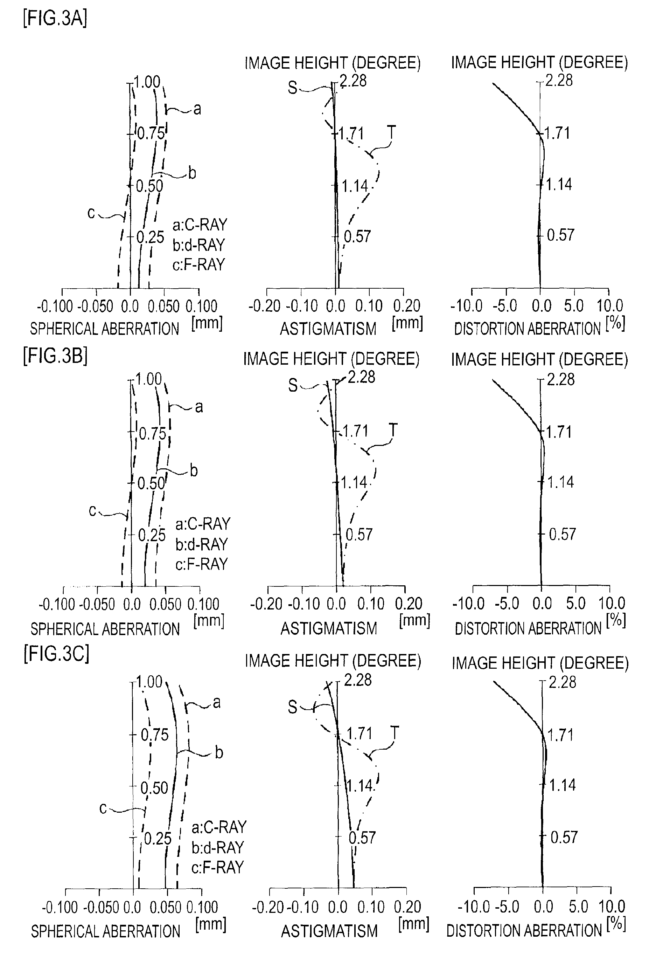

For the imaging lens system 50 configured with this numerical example, Figs. 3A, 3B and 3C show the spherical aberration, the astigmatism and the distortion aberration for object distances of 600, 120 and 50 mm, respectively. In the graphs showing the spherical aberration of Figs. 3A through 3C, the dashed-dotted line a indicates the spherical aberration of C-ray with a wavelength of 656.2700 nm, the solid line b indicates the spherical aberration of d-ray with a wavelength of 587.5600 nm, and the dashed line c indicates the spherical aberration of F-ray with a wavelength of 486.1300 nm.

In this case, as seen from Figs. 3A through 3C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be reduced.

Thus, in the first embodiment, the practical imaging lens system 50 can be configured in which the aberrations are sufficiently reduced by the two lens groups. This can facilitate the downsizing of the imaging apparatus 100 including this imaging lens system 50.

[2] Second embodiment

Next, a numerical example of a specific lens structure applicable as the second embodiment is described. This example is also applied to the imaging lens system 50 of the imaging apparatus 100 described with reference to Fig. 1. The focal length f, the F-number Fno and the angle of view $2\omega$ ($\omega$ is a half angle of view) of the imaging lens system 50 are as follows:

f = 3.7 mm,
Fno = 2.7, and
2ω = 63°.

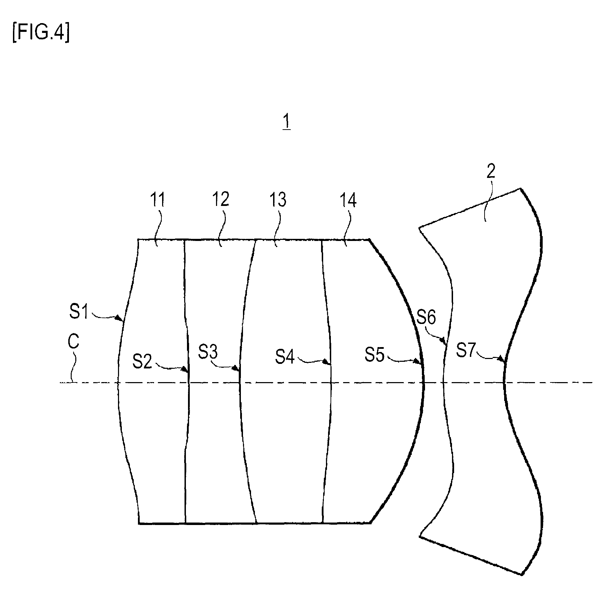

As shown in Fig. 4, the incidence and outgoing surfaces of the first lens group 1 and the second lens group 2 are denoted in the order from the object side as first through seventh surfaces S1 through S7. In Fig. 4, the parts described with reference to Fig. 1 are denoted by the same numerals, and will not be repeatedly described. For each of the first through seventh surfaces S1 through S7, Table 4 below shows the curvature radius, the spacing along the optical axis between the surfaces, the refraction index of d-ray for the medium between the surfaces and, similarly, the Abbe's number of d-ray, and others. Again, the second surface S2 also operates as the stop S using the edge of the enclosure 10 as described with reference to Fig. 1.

[Table 4]

| Surface number | Curvature radius r [mm] | Spacing along optical axis between surfaces d [mm] | Refraction index between surfaces n [d-ray] | Abbe's number ν [d-ray] | Type etc. |
|---|---|---|---|---|---|
| S1 | 2.861 | 0.700 | 1.5251 | 56.0 | Aspheric |
| S2 | -27.243 | 0.500 | 1.4982 | 34.6 | Aperture stop, aspheric |
| S3 | R3 | 0.900 | 1.3430 | 47.0 | |
| S4 | -4.588 | 0.900 | 1.5251 | 56.0 | Aspheric |
| S5 | -1.934 | 0.200 | - | - | Aspheric |
| S6 | 1.876 | 0.600 | 1.5251 | 56.0 | Aspheric |
| S7 | 1.023 | 0.500 | - | - | Aspheric |

Table 5 below shows aspherical coefficients of the first, second and fourth through seventh surfaces S1, S2 and S4 through S7 when Eq. 1 above is used as aspherical surface equation.

[Table 5]

| Surface number | k | A | B |
|---|---|---|---|
| S1 | 0.457374 | $-0.821096 \times 10^{-2}$ | $-0.195354 \times 10^{-1}$ |
| S2 | 1631.04059 | -0.143793 | $0.117808 \times 10^{-3}$ |
| S4 | -17.343639 | $0.177673 \times 10^{-1}$ | $0.154280 \times 10^{-4}$ |
| S5 | -8.683872 | -0.124476 | $0.370197 \times 10^{-1}$ |
| S6 | 0.407353 | -0.225646 | $0.581000 \times 10^{-5}$ |
| S7 | -3.282772 | $-0.598662 \times 10^{-1}$ | $0.101357 \times 10^{-2}$ |

Table 6 below shows numerical examples of R3 of Table 4 above for object distances of 600, 120 and 50 mm in the first and second lens groups 1 and 2 shown in Fig. 4.

[Table 6]

| Object distance [mm] | R3 |
|---|---|
| 600 | 5.953 |
| 120 | 8.639 |

(continued)

| Object distance [mm] | R3 |
|---|---|
| 50 | 32.676 |

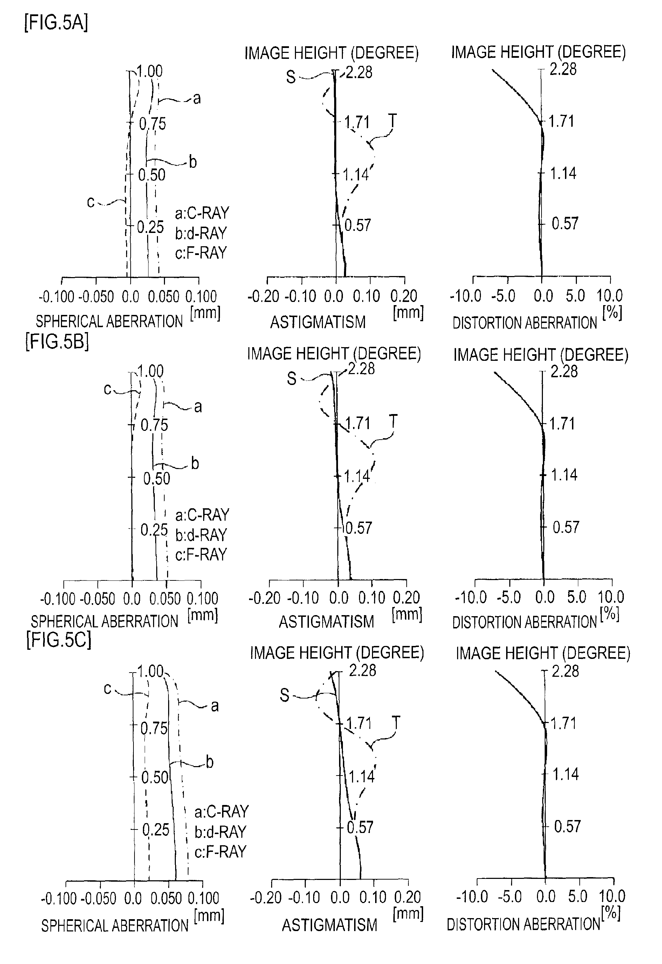

For the imaging lens system 50 configured with this numerical example, Figs. 5A, 5B and 5C show the spherical aberration, the astigmatism and the distortion aberration for object distances of 600, 120 and 50 mm, respectively. Again in this case, as seen from Figs. 5A through 5C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be sufficiently reduced.

Thus, also in the second embodiment, the practical imaging lens system 50 can be configured in which the aberrations are sufficiently reduced by the two lens groups. This can facilitate the downsizing of the imaging apparatus 100 including this imaging lens system 50.

[3] Third embodiment

Next, a numerical example of a specific lens structure applicable as the third embodiment is described. This example is also applied to the imaging lens system 50 of the imaging apparatus 100 described with reference to Fig. 1. The focal length f, the F-number Fno and the angle of view $2\omega$ ($\omega$ is a half angle of view) of the imaging lens system 50 are as follows:

f = 3.7 mm,
Fno = 2.7, and
$2\omega = 63°$.

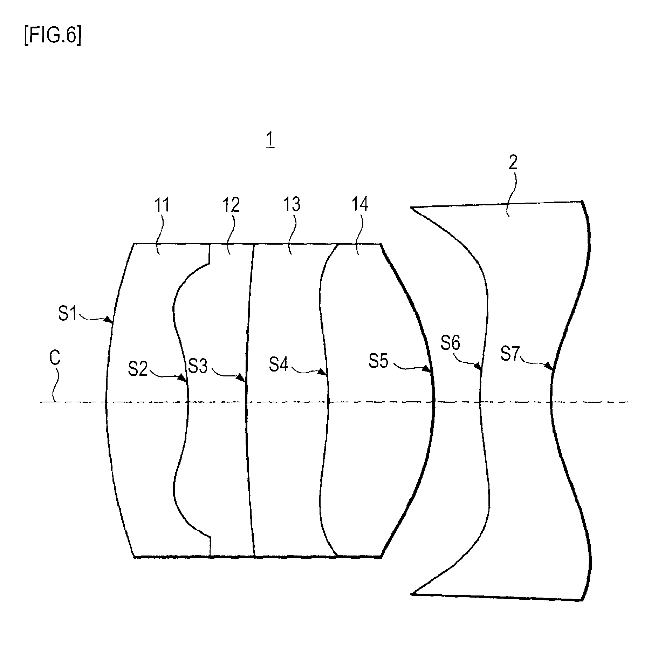

As shown in Fig. 6, the incidence and outgoing surfaces of the first lens group 1 and the second lens group 2 are denoted in the order from the object side as first through seventh surfaces S1 through S7. In Fig. 6, the parts described with reference to Fig. 1 are denoted by the same numerals, and will not be repeatedly described. For each of the first through seventh surfaces S1 through S7, Table 7 below shows the curvature radius, the spacing along the optical axis between the surfaces, the refraction index of d-ray for the medium between the surfaces and, similarly, the Abbe's number of d-ray, and others. Again, the second surface S2 also operates as the stop S using the edge of the enclosure 10 as described with reference to Fig. 1.

[Table 7]

| Surface number | Curvature radius r [mm] | Spacing along optical axis between surfaces d [mm] | Refraction index between surfaces n [d-ray] | Abbe's number ν [d-ray] | Type etc. |
|---|---|---|---|---|---|
| S1 | 3.270 | 0.700 | 1.5251 | 56.0 | Aspheric |
| S2 | -1.284 | 0.500 | 1.4982 | 34.6 | Aperture stop, aspheric |
| S3 | R3 | 0.700 | 1.3430 | 47.0 | |
| S4 | -2.417 | 0.900 | 1.5251 | 56.0 | Aspheric |
| S5 | -1.702 | 0.400 | - | - | Aspheric |
| S6 | 2.246 | 0.600 | 1.5251 | 56.0 | Aspheric |
| S7 | 1.101 | 0.500 | - | - | Aspheric |

Table 8 below shows aspherical coefficients of the first, second and fourth through seventh surfaces S1, S2 and S4 through S7 when Eq. 1 above is used as aspherical surface equation.

[Table 8]

| Surface number | k | A | B |
|---|---|---|---|
| S1 | -0.132354 | $-0.112748 \times 10^{-1}$ | $-0.276908 \times 10^{-2}$ |
| S2 | -3.805752 | 0.114905 | 0.138874 |
| S4 | -33.432715 | $0.731045 \times 10^{-2}$ | $0.442205 \times 10^{-1}$ |
| S5 | -8.683872 | -0.110879 | $0.360626 \times 10^{-1}$ |
| S6 | 0.771489 | -0.185365 | $-0.110968 \times 10^{-1}$ |
| S7 | -3.48144 | $-0.593433 \times 10^{-1}$ | $0.137603 \times 10^{-2}$ |

Table 9 below shows numerical examples of R3 of Table 7 above for object distances of 600, 120 and 50 mm in the first and second lens groups 1 and 2 shown in Fig. 6.
[Table 9]

| Object distance [mm] | R3 |
|---|---|
| 600 | 8.027 |
| 120 | 12.756 |
| 50 | -256.614 |

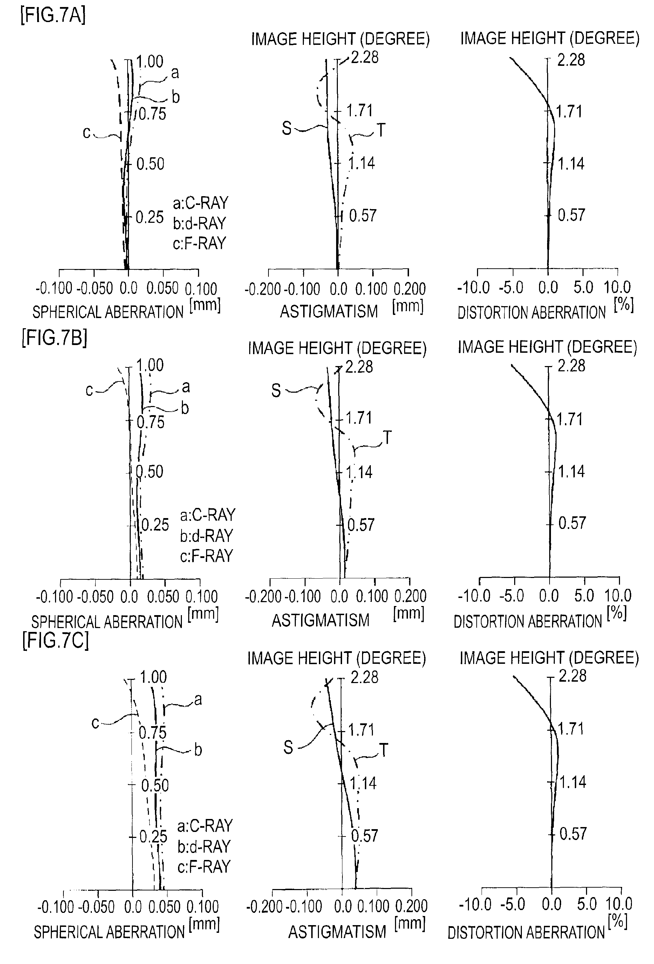

For the imaging lens system 50 configured with this numerical example, Figs. 7A, 7B and 7C show the spherical aberration, the astigmatism and the distortion aberration for object distances of 600, 120 and 50 mm, respectively. Again in this case, as seen from Figs. 7A through 7C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be reduced.

Thus, also in the third embodiment, the practical imaging lens system 50 can be configured in which the aberrations are sufficiently reduced by the two lens groups. This can facilitate the downsizing of the imaging apparatus 100 including this imaging lens system 50.

[4] Fourth embodiment

Next, a numerical example of a specific lens structure applicable as the fourth embodiment is described. This example is also applied to the imaging lens system 50 of the imaging apparatus 100 described with reference to Fig. 1. The focal length f, the F-number Fno and the angle of view 2ω (ω is a half angle of view) of the imaging lens system 50 are as follows:

f = 3.7 mm,
Fno = 2.7, and
2ω = 63°.

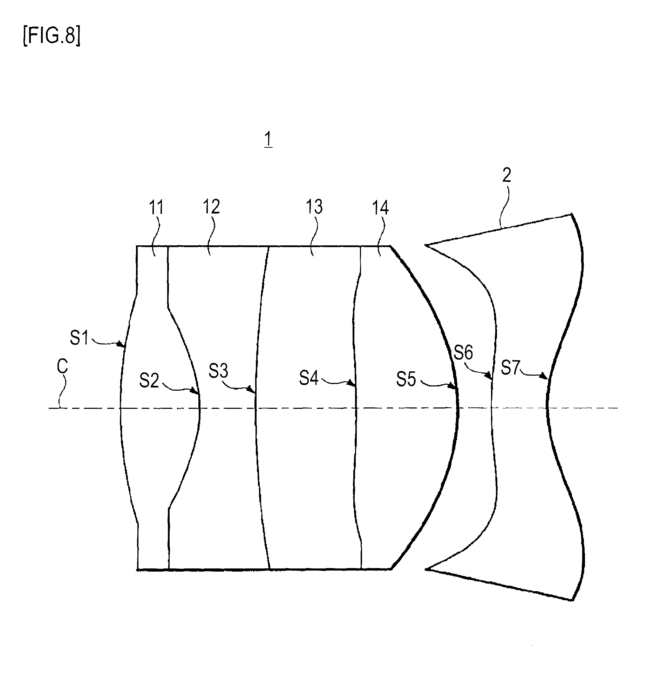

As shown in Fig. 8, the incidence and outgoing surfaces of the first lens group 1 and the second lens group 2 are denoted in the order from the object side as first through seventh surfaces S1 through S7. In Fig. 8, the parts described with reference to Fig. 1 are denoted by the same numerals, and will not be repeatedly described. For each of the first through seventh surfaces S1 through S7, Table 10 below shows the curvature radius, the spacing along the optical axis between the surfaces, the refraction index of d-ray for the medium between the surfaces and, similarly, the Abbe's number of d-ray, and others. Again, the second surface S2 also operates as the stop S using the edge of the enclosure 10 as described with reference to Fig. 1.
[Table 10]

| Surface number | Curvature radius r [mm] | Spacing along optical axis between surfaces d [mm] | Refraction index between surfaces n [d-ray] | Abbe's number ν [d-ray] | Type etc. |
|---|---|---|---|---|---|
| S1 | 3.164 | 0.700 | 1.5251 | 56.0 | Aspheric |
| S2 | -1.066 | 0.500 | 1.4982 | 34.6 | Aperture stop, aspheric |
| S3 | R3 | 0.900 | 1.3430 | 47.0 | |
| S4 | -3.952 | 0.900 | 1.5251 | 56.0 | Aspheric |
| S5 | -1.474 | 0.300 | - | - | Aspheric |
| S6 | 2.788 | 0.500 | 1.5251 | 56.0 | Aspheric |
| S7 | 1.026 | 0.500 | - | - | Aspheric |

Table 11 below shows aspherical coefficients of the first, second and fourth through seventh surfaces S1, S2 and S4 through S7 when Eq. 1 above is used as aspherical surface equation.
[Table 11]

| Surface number | k | A | B |
|---|---|---|---|
| S1 | -0.333595 | $-0.108931 \times 10^{-1}$ | $-0.603071 \times 10^{-2}$ |
| S2 | -3.352109 | - | - |
| S4 | -176.78522 | $0.418844 \times 10^{-1}$ | $0.795827 \times 10^{-2}$ |
| S5 | -8.683872 | -0.102886 | $0.221741 \times 10^{-1}$ |
| S6 | 1.678235 | -0.177689 | $-0.367700 \times 10^{-1}$ |
| S7 | -3.764434 | -0.177689 | $0.221744 \times 10^{-2}$ |

Table 12 below shows numerical examples of R3 of Table 10 above for object distances of 600, 120 and 50 mm in the first and second lens groups 1 and 2 shown in Fig. 8.
[Table 12]

| Object distance [mm] | R3 |
|---|---|
| 600 | 5.953 |
| 120 | 8.251 |
| 50 | 26.320 |

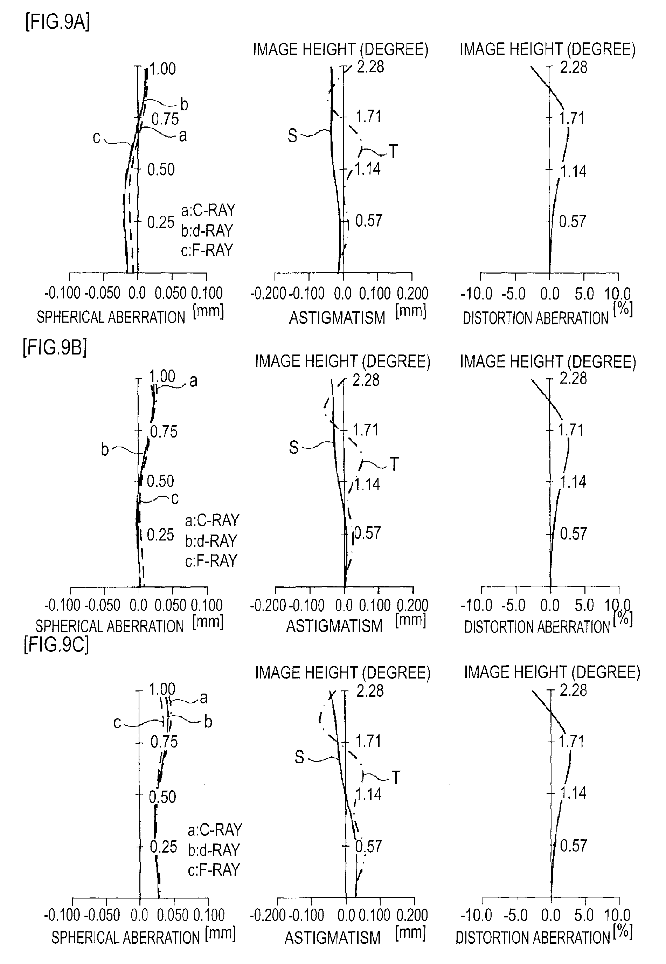

For the imaging lens system 50 configured with this numerical example, Figs. 9A, 9B and 9C show the spherical aberration, the astigmatism and the distortion aberration for object distances of 600, 120 and 50 mm, respectively. Again in this case, as seen from Figs. 9A through 9C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be reduced.

Thus, also in the fourth embodiment, the practical imaging lens system 50 can be configured in which the aberrations are sufficiently reduced by the two lens groups. This can facilitate the downsizing of the imaging apparatus 100 including this imaging lens system 50.

As described above, according to the invention, by using only two lens groups, an imaging lens system having an autofocus function using a liquid lens and an imaging apparatus using the imaging lens system can be provided.

According to the invention, when the object distance is infinite, the curvature center of the interface between an insulating liquid and a conductive liquid in the liquid lens included in a first lens group on the object side is configured to be shifted toward the conductive liquid. This configuration, at least when the object distance is infinite, causes the curvature of the interface between the two liquids to be concave toward the insulating liquid, which can reduce the undercorrection of the chromatic aberration of the entire imaging lens system.

Further, configuring the liquid lens system such that a light-transmissive substrate, the insulating liquid, the conductive liquid and a light-transmissive substrate are disposed in this order from the object side allows various aberrations to be reduced to a practically acceptable level, as described with respect to the above first through fourth embodiments.

Also, disposing a stop on the object side with respect to the position of the interface between the insulating liquid and the conductive liquid of the liquid lens system similarly allows the various aberrations to be sufficiently reduced.

Further, an enclosure of the liquid lens system also operating as the stop facilitates the simplification and downsizing of the configuration.

It should be understood that the invention is not intended to be limited to the above-described embodiments, but various variation and modification can be made without departing from the scope and spirit of the invention.

[Description of Reference Numerals and Signs]

1. first lens group, 2. second lens group, 10. enclosure, 11. light-transmissive substrate, 12. insulating liquid, 13. conductive liquid, 14. light-transmissive substrate, 15. first electrode, 16. second electrode, 17. dielectric film, 18, water-repellent film, 50. imaging lens system, 51. imaging unit, 52. signal conversion unit, 53. control unit, 54. voltage application unit, 100. imaging apparatus

**Claims**

1.  An imaging lens system comprising a first lens group and a second lens group in this order from the object side, wherein the first lens group includes a liquid lens system in which the curvature radius of the interface between an insulating liquid and a conductive liquid changes depending on an applied voltage, and wherein, when the object distance is infinite, the curvature center of the interface between the insulating liquid and the conductive liquid of the liquid lens system is shifted toward the conductive liquid.

2.  The imaging lens system according to claim 1, wherein the liquid lens system includes a light-transmissive substrate, the insulating liquid, the conductive liquid and a light-transmissive substrate disposed in this order from the object side.

3.  The imaging lens system according to claim 1, wherein a stop is disposed on the object side with respect to the position of the interface between the insulating liquid and the conductive liquid of the liquid lens system.

4.  The imaging lens system according to claim 3, wherein an enclosure of the liquid lens system also operates as the stop.

5.  An imaging apparatus comprising an imaging lens system, a stop and an imaging unit, wherein the imaging lens system includes a first lens group and a second lens group in this order from the object side, wherein the first lens group includes a liquid lens system in which the curvature radius of the interface between an insulating liquid and a conductive liquid changes depending on an applied voltage, and wherein, when the object distance is infinite, the curvature center of the interface between the insulating liquid and the conductive liquid of the liquid lens system is shifted toward the conductive liquid.

6.  The imaging apparatus according to claim 5, wherein the liquid lens system of the imaging lens system includes a light-transmissive substrate, the insulating liquid, the conductive liquid and a light-transmissive substrate disposed in this order from the object side.

[FIG.1]

[FIG.2]

[FIG.3A]

IMAGE HEIGHT (DEGREE)

IMAGE HEIGHT (DEGREE)

a:C-RAY
b:d-RAY
c:F-RAY

-0.100 -0.050 0.0 0.050 0.100
SPHERICAL ABERRATION [mm]

-0.20 -0.10 0.0 0.10 0.20
ASTIGMATISM [mm]

-10.0 -5.0 0.0 5.0 10.0
DISTORTION ABERRATION [%]

[FIG.3B]

IMAGE HEIGHT (DEGREE)

IMAGE HEIGHT (DEGREE)

a:C-RAY
b:d-RAY
c:F-RAY

-0.100 -0.050 0.0 0.050 0.100
SPHERICAL ABERRATION [mm]

-0.20 -0.10 0.0 0.10 0.20
ASTIGMATISM [mm]

-10.0 -5.0 0.0 5.0 10.0
DISTORTION ABERRATION [%]

[FIG.3C]

IMAGE HEIGHT (DEGREE)

IMAGE HEIGHT (DEGREE)

a:C-RAY
b:d-RAY
c:F-RAY

-0.100 -0.050 0.0 0.050 0.100
SPHERICAL ABERRATION [mm]

-0.20 -0.10 0.0 0.10 0.20
ASTIGMATISM [mm]

-10.0 -5.0 0.0 5.0 10.0
DISTORTION ABERRATION [%]

[FIG.4]

[FIG.5A]

IMAGE HEIGHT (DEGREE)

IMAGE HEIGHT (DEGREE)

1.00
0.75
0.50
c
0.25

a:C-RAY
b:d-RAY
c:F-RAY

a
b

S
2.28
1.71 T
1.14
0.57

2.28
1.71
1.14
0.57

-0.100 -0.050 0.0 0.050 0.100 [mm]
SPHERICAL ABERRATION

-0.20 -0.10 0.0 0.10 0.20 [mm]
ASTIGMATISM

-10.0 -5.0 0.0 5.0 10.0 [%]
DISTORTION ABERRATION

[FIG.5B]

IMAGE HEIGHT (DEGREE)

IMAGE HEIGHT (DEGREE)

c
1.00
0.75
0.50
0.25

a
b

a:C-RAY
b:d-RAY
c:F-RAY

S
2.28
1.71 T
1.14
0.57

2.28
1.71
1.14
0.57

-0.100 -0.050 0.0 0.050 0.100 [mm]
SPHERICAL ABERRATION

-0.20 -0.10 0.0 0.10 0.20 [mm]
ASTIGMATISM

-10.0 -5.0 0.0 5.0 10.0 [%]
DISTORTION ABERRATION

[FIG.5C]

IMAGE HEIGHT (DEGREE)

IMAGE HEIGHT (DEGREE)

c
1.00
0.75
0.50
0.25

a
b

a:C-RAY
b:d-RAY
c:F-RAY

S
2.28
1.71 T
1.14
0.57

2.28
1.71
1.14
0.57

-0.100 -0.050 0.0 0.050 0.100 [mm]
SPHERICAL ABERRATION

-0.20 -0.10 0.0 0.10 0.20 [mm]
ASTIGMATISM

-10.0 -5.0 0.0 5.0 10.0 [%]
DISTORTION ABERRATION

[FIG.6]

[FIG.7A]

IMAGE HEIGHT (DEGREE)　　IMAGE HEIGHT (DEGREE)

a:C-RAY
b:d-RAY
c:F-RAY

-0.100 -0.050 0.0 0.050 0.100
SPHERICAL ABERRATION [mm]

-0.200 -0.100 0.0 0.100 0.200
ASTIGMATISM [mm]

-10.0 -5.0 0.0 5.0 10.0
DISTORTION ABERRATION [%]

[FIG.7B]

IMAGE HEIGHT (DEGREE)　　IMAGE HEIGHT (DEGREE)

a:C-RAY
b:d-RAY
c:F-RAY

-0.100 -0.050 0.0 0.050 0.100
SPHERICAL ABERRATION [mm]

-0.200 -0.100 0.0 0.100 0.200
ASTIGMATISM [mm]

-10.0 -5.0 0.0 5.0 10.0
DISTORTION ABERRATION [%]

[FIG.7C]

IMAGE HEIGHT (DEGREE)　　IMAGE HEIGHT (DEGREE)

a:C-RAY
b:d-RAY
c:F-RAY

-0.100 -0.050 0.0 0.050 0.100
SPHERICAL ABERRATION [mm]

-0.200 -0.100 0.0 0.100 0.200
ASTIGMATISM [mm]

-10.0 -5.0 0.0 5.0 10.0
DISTORTION ABERRATION [%]

[FIG.8]

[FIG.9A]

SPHERICAL ABERRATION [mm]  
ASTIGMATISM [mm]  
DISTORTION ABERRATION [%]

[FIG.9B]

SPHERICAL ABERRATION [mm]  
ASTIGMATISM [mm]  
DISTORTION ABERRATION [%]

[FIG.9C]

SPHERICAL ABERRATION [mm]  
ASTIGMATISM [mm]  
DISTORTION ABERRATION [%]

## INTERNATIONAL SEARCH REPORT

| | International application No. |
|---|---|
| | PCT/JP2009/050690 |

A. CLASSIFICATION OF SUBJECT MATTER
*G02B13/00*(2006.01)i, *G02B3/14*(2006.01)i, *G02B7/09*(2006.01)i, *G02B7/28*
(2006.01)i, *G02B13/18*(2006.01)i

According to International Patent Classification (IPC) or to both national classification and IPC

B. FIELDS SEARCHED

Minimum documentation searched (classification system followed by classification symbols)
G02B13/00, G02B3/14, G02B7/09, G02B7/28, G02B13/18

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-272232 A  (Samsung Electro-Mechanics Co., Ltd. ),<br>18 October, 2007 (18.10.07),<br>Full text; all drawings<br>& US 2007/0229970 A1    & KR 10-0714583 B1 | 1-3,5,6<br>4 |
| X<br>Y | JP 2005-084387 A  (Konica Minolta Opto, Inc.),<br>31 March, 2005 (31.03.05),<br>Full text; all drawings<br>& US 2004/0227838 A1    & EP 1626301 A1<br>& WO 2004/102246 A1    & KR 10-2006-0004983 A | 1,2<br>3-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    23 February, 2009 (23.02.09) | Date of mailing of the international search report<br>    03 March, 2009 (03.03.09) |
|---|---|
| Name and mailing address of the ISA/<br>    Japanese Patent Office | Authorized officer |
| Facsimile No. | Telephone No. |

Form PCT/ISA/210 (second sheet) (April 2007)

## INTERNATIONAL SEARCH REPORT

| International application No. |
|---|
| PCT/JP2009/050690 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2004/038480 A1 (KONINKLIJKE PHYILIPS ELECTRONICS N.V.),<br>06 May, 2004 (06.05.04),<br>Full text; all drawings<br>& JP 2006-504132 A      & US 2006/0028734 A1<br>& EP 1567903 A          & KR 10-2005-0059291 A<br>& CN 1705901 A | 1,2<br>3-6 |
| Y | JP 2006-154517 A (Seiko Precision Inc.),<br>15 June, 2006 (15.06.06),<br>Figs. 1, 2, 3<br>(Family: none) | 1-6 |
| Y<br>A | JP 2007-156277 A (Kyocera Corp.),<br>21 June, 2007 (21.06.07),<br>Par. No. [0031]; Fig. 2<br>(Family: none) | 4<br>1-3,5,6 |
| Y<br>A | JP 2008-003576 A (Olympus Corp.),<br>10 January, 2008 (10.01.08),<br>Par. No. [0079]; Fig. 17<br>(Family: none) | 4<br>1-3,5,6 |

Form PCT/ISA/210 (continuation of second sheet) (April 2007)

**EP 2 239 611 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005084387 A

- JP 2006072295 A

**Non-patent literature cited in the description**

- **S. Kuiper et al.** Variable-focus liquid lens for miniature cameras. *Applied Physics Letters,* 16 August 2004, vol. 85 (7), 1128-1130